(19)

Europäisches
Patentamt
European
Patent Office
Office européen
des brevets

(11) **EP 4 163 825 A1**

(12) **EUROPEAN PATENT APPLICATION**

(43) Date of publication:
**12.04.2023 Bulletin 2023/15**

(21) Application number: **21201680.2**

(22) Date of filing: **08.10.2021**

(51) International Patent Classification (IPC):
**G06N 3/00** (2006.01)       **G06N 3/04** (2006.01)
**G06N 7/00** (2006.01)       **G06N 3/08** (2006.01)
**B60W 50/00** (2006.01)

(52) Cooperative Patent Classification (CPC):
**G06N 3/006; B60W 60/001; G06N 3/045;
G06N 3/08; G06N 7/01**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Bayerische Motoren Werke
Aktiengesellschaft
80809 München (DE)**

(72) Inventor: **van der Heiden, Tessa
80333 München (DE)**

(54) **METHOD AND SYSTEM FOR TRAINING AUTONOMOUSLY ACTING ENTITIES**

(57)     A method for determining a set of policies for controlling a corresponding set of different acting entities which is represented by a corresponding set of agents is described. The method comprises: determining a set of actions of the corresponding set of agents using a corresponding set of state-action-functions, respectively; wherein the set of state-action-functions is dependent on a set of states of the corresponding set of agents; determining a set of updated states of the corresponding set of agents based on the determined set of actions; determining a set of instant rewards for the corresponding set of agents based on the set of actions and based on the set of states and/or based on the set of updated states of the corresponding set of agents; and updating the set of state-action-functions based on the set of instant rewards; wherein the set of policies for controlling the corresponding set of acting entities is determined based on the updated set of state-action-functions, respectively.

300 →

| determining actions of the N agents using the state-action-functions for the N agents, based on the states of the N agents | ⌐ 301 |

↓

| determining updated states of the N agents | ⌐ 302 |

↓

| determining instant rewards for the N agents based on the actions and the states of the N agents, respectively | ⌐ 303 |

↓

| updating the action value functions for the N agents based on the instant rewards | ⌐ 304 |

**Fig. 3**

**Description**

The present document is directed at a method and at a corresponding system for enabling autonomously acting entities, such as autonomous vehicles and/or cobots, to act in a coordinated and/or cooperative manner.

Autonomous vehicles are configured to move autonomously within a street network. For this purpose, an autonomous vehicle comprises a control unit which is configured to take driving actions (such as a steering action and/or an acceleration action and/or deceleration action) in dependence of the current state of the vehicle. The state of the vehicle may include information regarding the internal state of the vehicle itself (such as the position, the driving speed, the heading angle, etc.) and/or information regarding the vehicle's observation of the environment of the vehicle (which is captured using e.g., one or more environment sensors of the vehicle).

The control unit of the vehicle may make use of a so-called policy (e.g., a control algorithm) for determining a driving action based on the state of the vehicle. The policy may have been training offline using machine-learning techniques. In particular, the policy may be defined using an artificial neural network with a set of trained parameters (that have been trained using machine-learning techniques).

Another example for an autonomously acting entity is a collaborative robot (referred to as cobot), which may interact with another cobot and/or with a human worker within a manufacturing environment.

The present document is directed at the technical problem of enabling an autonomously acting entity, notably an autonomous vehicle and/or a cobot, to act in a cooperative and/or coordinated manner. In particular, the present document is directed at providing a trained policy for an autonomously acting entity, which fosters a cooperative and/or coordinated behavior of the autonomously acting entity. The technical problem is solved by each one of the independent claims. Preferred examples are specified in the dependent claims.

According to an aspect a method for determining a set of policies for controlling a corresponding set of different acting entities (e.g., one or more vehicles and/or cobots), wherein the set of different acting entities is represented by a corresponding set of agents. The method may be executed by a system comprising the set of entities, wherein the entities are configured to exchange information among each other (e.g., with regards to the actions taken by the different entities and/or with regards to the states of the different entities). Hence, training of the different policies for the different entities may be performed in a centralized manner. On the other hand, the different policies may (subsequently, after training) be used by the different entities in an independent and/or decentralized manner. By performing training of the policies in a centralized manner, policies may be trained which motivate and/or foster a cooperative and/or coordinated behavior of the different entities (even when, subsequent to training, each entity applies its policy independently from the other entities).

The method may be directed at learning a set of state-action-functions and/or the set of policies for the corresponding set of agents (i.e., entities) using an iterative training algorithm. In particular, the method may make use of a Multi-Agent Deep Deterministic Policy Gradient (MADDPG) algorithm for determining the set of policies and/or the set of state-action-functions. The set of state-action-functions may be trained such that after training each state-action-function is indicative of a cumulated reward which is to be expected for different state-action pairs.

The state-action-functions may be such that the state-action function for an arbitrary first agent depends on the action and the state of the first agent, as well as on the action and the state of at least one other agent (notably of all other agents) from the set of agents. By doing this, centralized training may be implemented in an efficient and robust manner.

The method comprises, at a given time instant of the iterative training phase, determining a set of actions of the corresponding set of agents using the corresponding set of state-action-functions (at the given time instant), respectively. As indicated above, the set of state-action-functions may be dependent on the set of states of the corresponding set of agents, respectively. In particular, the state-action-function of an agent may be indicative of the action that the agent should take, when the agent is in a particular state (notably the state-action-function of an agent may be indicative of the action which maximizes the expected cumulated reward of the agent).

The method may comprise determining sensor data from sensors of the set of acting entities. Example sensors are environment sensors for sensing the environment of an entity (e.g., a camara, a radar sensor, a lidar sensor, etc.) and/or a state sensor for sensing an internal state of an entity (e.g., a speed sensor and/or an acceleration sensor). The set of states of the corresponding set of agents may then be determined based on the sensor data (i.e., based on observations of the entities or agents).

In addition, the method may comprise determining a set of updated states of the corresponding set of agents based on the determined set of actions. In particular, (e.g., in the context of a simulation and/or in the context of actual operation of the set of entities) the set of entities may be operated according to the corresponding set of actions. Using the sensor data from the sensors of the different entities, the set of updated states may be determined.

The method further comprises determining a set of instant rewards for the corresponding set of agents based on the set of actions and based on the set of states and/or based on the set of updated states of the corresponding set of agents. Each entity or corresponding agent may exhibit a certain reward function. The reward function for an entity or agent may specify a target behavior of the entity or agent (such as a collision free operation and/or such as movement of the entity along a target trajectory). In the contest of simulation and/or actual operation of the set of entities, the instant rewards, i.e., the values of the rewards functions, for a tuple of action, state and/or updated state may be determined for each of the set of agents. Hence, the set of instant rewards for the corresponding set of agents may be determined using a corresponding set of reward functions for the corresponding set of agents, respectively.

The method further comprises updating the set of state-action-functions based on the set of instant rewards. The state-action-functions may each be represented by an artificial neural network each comprising a set of parameters. Updating the set of state-action-functions may comprise updating the set of parameters of the artificial neural networks of the set of state-action-functions, thereby enabling the set of state-action-functions to be determined in a precise and reliable manner.

The set of policies for controlling the corresponding set of acting entities (notably autonomous vehicles) may be determined based on the updated set of state-action-functions, respectively (notably subsequent to convergence of the training algorithm). In particular, the policy for an entity may be determined based on the state-action-function for the corresponding agent by determining for each possible state an action which maximizes the state-action-function.

The instant reward (and/or the corresponding reward function) for a first agent from the set of agents may comprise a common reward term for a common reward which is common to all agents from the set of agents. Furthermore, the instant reward (and/or the corresponding reward function) for a first agent from the set of agents may comprise an individual reward term for an individual reward which is only applicable to the first agent and which is not applicable to the one or more other agents from the set of agents. In a similar manner, the instant reward and/or the reward function for each agent may comprise a common reward term and an individual reward term. By doing this, the centralized training of the policies for the set of agents or entities leads to a cooperative and/or coordinated behavior of the entities in a particularly reliable manner.

The method may comprise applying a symmetry function to a first state-action-function from the set of state-action-functions, to determine a first action from the set of actions. The symmetry function may be selected in a pseudo-random manner from an overall set of symmetry functions (within each iteration). Alternatively, or in addition, the symmetry function may be dependent on the context and/or the underlying problem and/or the task for which the set of policies is determined. In a similar manner, a symmetry function may be applied to the other state-action-functions. By taking into account the symmetry of policies, policies may be determined which are particularly robust for interaction with unknown partners (such as human beings).

The set of state-action-functions may be updated in dependence of a ground belief (e.g., a grounded belief regarding one or more conventions for the interaction between different acting entities). By taking into account a grounded belief, policies may be determined which are particularly robust for interaction with unknown partners (such as human beings).

An acting entity from the set of acting entities may be a collaborative robot interacting with a human being, in particular within a manufacturing environment.

The method may comprise (subsequent to training) controlling at least one of the set of acting entities using the corresponding policy (in a decentralized and/or independent manner). In particular, the policy for an acting entity may be used to determine an action (which is taken by the acting entity) based on the state of the acting entity.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

According to a further aspect, a policy for controlling an acting entity (notably a vehicle) is described, which has been determined using the method described in the present document.

According to a further aspect, a method for controlling an acting entity (notably a vehicle) using a policy is described, wherein the policy has been determined using the method described in the present document.

According to another aspect, a training system for determining a set of policies for controlling a corresponding set of different acting entities (notably vehicles) which is represented by a corresponding set of agents is described. The training system is configured to determine a set of actions of the corresponding set of agents using a corresponding set of state-action-functions, respectively. Furthermore, the system is configured to determine a set of updated states of the corresponding set of agents based on the determined set of actions. In addition, the system is configured to determine a set of instant rewards for the corresponding set of agents based on the set of actions and based on the set of states and/or based on the set of updated states of the corresponding set of agents. Furthermore, the system is configured to update the set of state-action-functions based on the set of instant rewards. The set of policies for controlling the corresponding set of acting entities may be determined based on the updated set of state-action-functions, respectively.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein

Fig. 1a shows example components of a vehicle, as an example of an acting entity;
Fig. 1b shows an example situation with multiple interacting entities;
Fig. 2 illustrates an example scheme for training the policies of multiple agents (for multiple acting entities); and
Fig. 3 shows a flow chart of an example method for determining policies for multiple agents (for multiple acting entities).

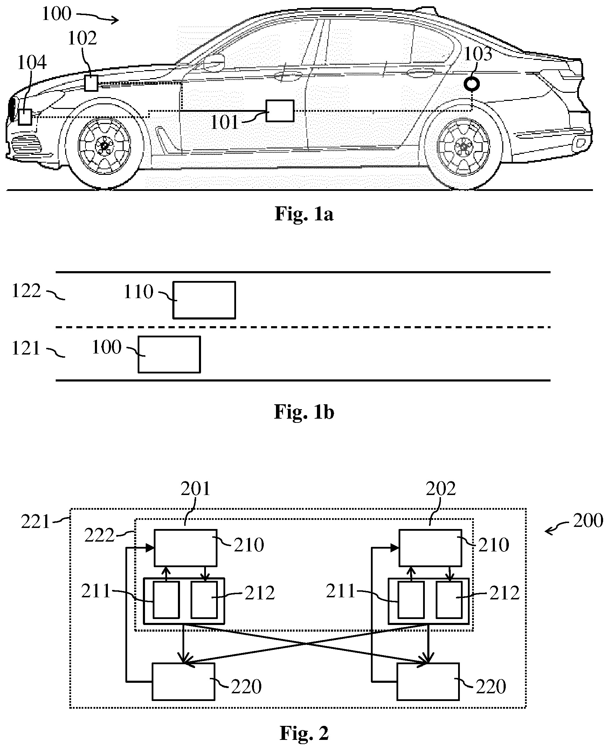

As outlined above, the present document is directed at enabling acting entities to act in a coordinated and/or cooperative manner. In this context, Fig. 1a shows a vehicle as an example for an acting entity. It should be noted that the aspects which are described herein with respect to a vehicle are applicable to an acting entity in general (such as a household robot, etc.).

The vehicle 100 comprises one or more sensors 102 (notably one or more environment sensors and/or one or more internal sensors) which are configured to determine sensor data regarding the internal state and/or the surrounding state of the vehicle 100. Example sensors 102 are: a camera for capturing the environment, a lidar sensor for capturing the environment, a radar sensor for capturing the environment, a speed sensor for determining the speed of the vehicle, a position sensor for determining the position of the vehicle, etc.

A control unit 101 of the vehicle 100 may be configured to determine the current state of the vehicle 100 based on the sensor data. Furthermore, the vehicle 100 may make use of a pre-determined policy for determining an action to be taken by the vehicle 100. The action may relate to autonomous driving of the vehicle 100. Example actions are: accelerating the vehicle 100, decelerating the vehicle 100, steering the vehicle 100, turning on a direction indicator of the vehicle 100, etc.

Furthermore, the control unit 101 may be configured to control one or more actors 103, 104 (e.g., an engine, a braking unit, a steering unit, a direction indicator) in dependence of the determined action.

The process of determining the state of the vehicle 100, of determining an action based on the state, and of causing the action to be executed (thereby changing the state of the vehicle 100) may be repeated (periodically) at subsequent time instants, thereby causing the vehicle 100 to drive in an autonomous manner.

Fig. 1b shows a driving situation, where a first vehicle 100 is driving on a first lane 121 and a second vehicle 110 is driving on a second lane 122 of a road. The first vehicle 100 may want to change from the first lane 121 to the second lane 122 (e.g., in order to overtake another vehicle, not shown in Fig. 1b). For this purpose, the control unit 101 of the first vehicle 100 may determine as an action to activate the direction indicator. A human driver of the second vehicle 110, who acts in a cooperative manner, would take the activated direction indicator of the first vehicle 100 as an indication to accelerate or to decelerate the second vehicle 110, in order to create a gap on the second lane 122, which allows the first vehicle 100 to perform the lane change. On the other hand, an autonomously driving second vehicle 110 may ignore the activated direction indicator of the first vehicle 100, thereby preventing the first vehicle 100 from performing the lane change.

An approach for enabling autonomous vehicles 100, 110 to drive in a coordinated and cooperative manner is the use of multi-agent reinforcement learning for determining the policies of the autonomous vehicles 100, 110. Fig. 2 illustrates an example scheme 200 for training the policies 210 of autonomous vehicles 100 (in general autonomously acting entities) using a multi-agent reinforcement learning approach.

The scheme 200 makes use of a centralized training phase 221 during which the different agents 201, 202 (for different acting entities 100, 110) share information among each other. On the other hand, during the execution phase 222 the (trained) policies 210 for the different agents 201, 202 (and the different acting entities 100, 110) are used in an independent manner from one another. Nevertheless, the fact that the policies 210 for the different agents 201, 202, i.e., for the different acting entities 100, 110, have been trained jointly, enables the provision of policies 210 that foster coordinated and/or cooperative behavior between the different entities 100, 110.

Within the training scheme 200 each acting entity 100, 110 (e.g., each vehicle) is represented by a corresponding agent 201, 202. At a particular time instant k an entity 201, 202 determines its state 211 (based on observations, i.e. based on sensor data from one or more sensors 102). Using the current version of the policy 210 (at the time instant k) an action 212 may be determined based on the state 211. Using a reward function for the agent 201, 202 an instant reward r (at the time instant k) may be determined based on the state and the action at the time instant k. The reward function may e.g., be directed at avoiding collisions between different agents 201, 202 (i.e., entities 100, 110) and/or at guiding the agents 201, 202 along a pre-determined trajectory (e.g., within the center of the current lane 121, 122).

The action taken by an agent 201, 202 at the time instant k leads to an updated state of the agent 201, 202 at the subsequent time instant $k + 1$ (which may be observed using the sensor data of one or more sensors 102). The instant reward r, the action $a$ and the state $s$ at the time instant $k$, and possibly the updated state s at the subsequent time instant $k + 1$ may be used to update a state-action-function $Q$ 220, which is configured to indicate the expected cumulated, discounted, reward for different state-action-pairs. The state-action-function $Q$ 220 of an agent 201, 202 may be used to define and/or update the policy 210 of the agent 201, 202, by determining for each possible state 211 the corresponding action 212 that maximizes the state-action-function $Q$ 220 (i.e. that maximized the expected cumulated, discounted, reward).

The agents 201, 202 may be operated for a sequence of time instants $k$ (e.g., using simulations or actual operation of corresponding entities 100, 110), thereby iteratively updating the state-action-function $Q$ 220 and by consequence updating the policy 210. The state-action-function $Q$ 220 and/or the policy 210 may each be modelled by a neural network with parameters that are trained during the iterative training procedure.

The iterative training procedure for training the state-action-function $Q$ 220 typically makes use of an objective function. The objective function depends on the reward function and notably on the instant rewards, which are attributed to the agent 201, 202. A possible approach for optimizing the objective function is to iteratively update the state-action-function $Q$ 220 using the corresponding Bellman equation for the objective function.

In order to take into account the impact of the different agents 201, 202 onto each other, state-action-functions $Q$ 220 may be trained for the different agents 201, 202, which not only depend on the state and the action of a particular agent 201, 202, but also on the state and the action of the one or more other agents 201, 202. Such a state-action-function 220 for an agent 201, 202 may be referred to as a centralized state-action-function 220 for the agent 201, 202. By training such centralized state-action-functions 220 for the different agents 201, 202, a coordinated behavior between the agents 201, 202 may be included into the policies 210 for the different agents 201, 202.

In cooperative tasks, R may indicate the reward function that maps the combination of states 211 and joint actions 212 of all agents 201, 202 into a single scalar reward. A Dec-POMDP (partially observable Markov decision process), an extension of the MDP (Markov decision process) for multi-agent systems, being both decentralized and partially observable, may be considered. This means that each of the n agents 201, 202 conditions its action 212 on its partial observation of the environment and a tuple may be defined: (**S**; **A**; $T$; **O**; $O$; $R$; $n$). $\mathbf{s} \in \mathbf{S}$ may be the true global state in the environment. Furthermore, at each time step $k$, the state transition function $T$ may map the joint action $\mathbf{a} \in \mathbf{A}$ and the state s to a new or updated state $s'$, with probability distribution $P(s'|s;\mathbf{a})$. Since the environment is partially observable and all agents 201, 202 obtain their own observation of the environment (through the sensor data of the one or more sensors 102), the observation function O may map the joint action $\mathbf{a}$ and next state s' to a new joint observation $\mathbf{o} \in \mathbf{O}$ with probability distribution $P(\mathbf{o}|\mathbf{a};s')$.

DDPG (Deep Deterministic Policy Gradient) and its extension for the multi-agent setting, MADDPG, may be used as the underlying algorithm for determining the policies $\mu$ of the different agents 201, 202. More specifically, the MADDPG is an off-policy variant with centralized critics. The MADDPG algorithm learns an approximation for the optimal action-value-function $Q^*(s; a)$, as well as for the optimal action $a^*(s)$, which are the critic $Q_\phi(s; a)$ with parameters $\phi$ and the actor (i.e. the policy) $\mu_\theta(s)$ with parameters $\theta$. Details regarding the MADDPG algorithm are described in R. Lowe, Y. I. Wu, A. Tamar, J. Harb, O. P. Abbeel, and I. Mordatch. Multi-agent actor critic for mixed cooperative-competitive environments, In Advances in neural information processing systems, pages 6379-6390, 2017, which is incorporated herein in its entirety.

Extending the objective of the DDPG to n policies 210, wherein the set of all policies is denoted by $\mu$ and wherein a centralized state-action function is denoted by $Q_{i,\phi}^\mu(\mathbf{a}, \mathbf{o})$ for some agent $i$. The centralized state-action function 220 of an agent 201, 202 takes as input the actions $\mathbf{a}$ 212 and observations $\mathbf{o}$ 211 of all agents 201, 202. The objective may then be written as

$$L(\phi_i, D) = \mathop{\mathrm{E}}_{(s,a,o,r,s'.o') \sim D} \left[ \left( Q_{i,\phi}^\mu(\mathbf{a}, \mathbf{o}) - \left( r_i + \gamma \max_{\mathbf{a'}} Q_{i,\phi}^\mu(\mathbf{a'}, \mathbf{o'}) \right) \right)^2 \right]$$

where D is the replay buffer that stores past transitions. The target critic and policy neural networks may have parameters $\theta'$ and $\Phi'$. $r_i$ represents the instant reward for the agent $i$.

The schemes outlined in the present document may be used e.g., for an autonomous robot 100, 110 that in some situations needs to be teleoperated. A further example is a fleet of autonomous vehicles or a swarm of drones. In particular, the schemes outlined in the present document may be applied to a collaborative robot (i.e., a cobot) which interacts with a human being, e.g., within a manufacturing environment.

In order to allow agents 201, 202 and respective acting entities 100, 110 to interact in a collaborative manner, the concept of symmetry may be taken into account during training of the policies 210 of the set of agents 201, 202. As outlined above, the policy $\mu(s)$ of an agent 201, 202 may indicate a certain action *a* for a given state s of the agent 201, 202. The policy $\mu(s)$ of an agent 201, 202 should typically exhibit a certain number of symmetries, wherein the symmetries typically depend on the underlying problem for which the agent 201, 202 is trained. By way of example, the policy for an autonomous vehicle typically exhibits symmetries at road crossings (e.g., with respect to the road from which the vehicle approaches the road crossing). In another example, the policy of a cobot typically exhibits symmetries regarding its position relative to an object and/or a human being that the cobot is interacting with. The underlying symmetries of a policy 210 may be expressed within a symmetry function $\varphi()$ which can be applied to a policy 210 without impacting the underlying problem.

The one or more symmetries of a policy 210 may be taking into account during training by permutating the policy 210 with respect to the one or more symmetries in a randomized manner. Hence, instead of using the policy $\mu(s)$ of an agent 201, 202 during an iterating of the training algorithm, an (arbitrarily selected) symmetry $\varphi(\mu(s))$ of the policy 210 may be used for determining the corresponding action. By doing this, a policy 210 may be determined which allows a corresponding acting entity 100, 110 to interact with unknown partners, such as humans, in an improved manner.

Details regarding the use of symmetries are described in Hengyuan Hu et al. "Other-Play" for Zero-Shot Coordination", arXiv:2003.02979v3, which is incorporated herein in its entirety.

By making use of the underlying symmetries of a policy 210, dependencies between different agents 201, 202 may be reduced and/or avoided, thereby enabling the agents 201, 202 to interact with unknown partners in a robust manner. An alternative or additional measure for reducing dependencies between agents 201, 202 is to reduce and/or avoid counterfactual reasoning. This may be achieved by modifying the Q-function, i.e., the centralized state-action function 220, to comprise information of actions that depend on the effect on the environment (rather than on the behavior of another agent). In particular, a grounded belief may be taken into account when training the one or more policies 210. Details regarding this approach as described in Hengyuan Hu et al., "Off-Belief Learning", arXiv:2103.04000v5, which is incorporated herein in its entirety.

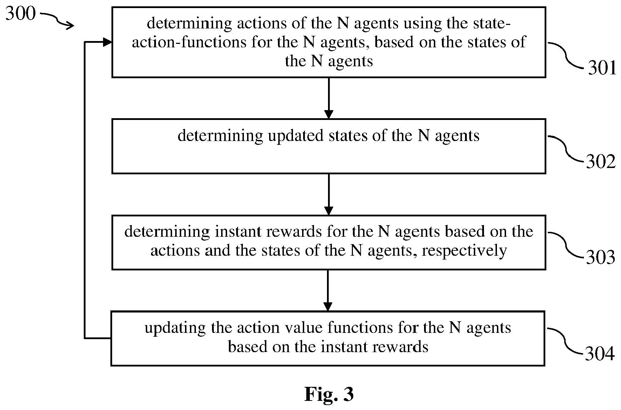

Fig. 3 shows a flow chart of an example method 300 for determining a set of policies 210 for controlling a corresponding set of different acting entities 100, 110 which is represented by a corresponding set of agents 201, 202. The acting entities 100, 110 may be autonomous (street and/or motorized) vehicles. A policy 210 for an acting entity 100, 110 may be a function (e.g. represented by a trained neural network), which is configured to determine a certain action 212 (to be performed by the entity 100, 110) based on the state 211 of the entity 100, 110 (wherein the state 211 is typically determined based on sensor data from one or more sensors 102 of the entity 100, 110, i.e. based on observations).

The method 300 is directed at iteratively training the set of policies 210, e.g., during (simulated) operation of the set of acting entities 100, 110. For this purpose, each entity 100, 110 (or corresponding agent 201, 202) may be provided with a reward function for guiding the behavior of the entity 100, 110. The reward function may comprise one or more terms which motivate or foster e.g.

- a collision free movement of the entity 100, 110; and/or
- a rapid and/or precise movement along a target trajectory for the entity 100, 110.

In this context, the method 300 may make use of a DDPG algorithm for training the set of policies 210.

In particular, the reward function may comprise one or more common rewards which are common to the set of acting entities 100, 110 and one or more individual rewards which are directed at a single acting entity 100, 110 from the set of acting entities 100, 110. Hence, the utility and/or reward function may be separated in common and individual rewards. The one or more common rewards may take care of collisions (between agents 201, 202) and/or may be directed at avoiding undesirable side effects of the behavior of an agent 201 (notably between an agent 201 and the entire group of agents 201, 202). By way of example, a reactive behavior may decelerate the traffic flow. The one or more individual rewards may focus solely on one or more individual preferences of an agent 201, 202, for example, efficiency and/or comfort.

The one or more individual rewards may be taken into account within the overall optimization problem as additional constraints, e.g., using the Lagrange multiplier scheme.

The method 300 comprises, at a given time instant of an iterative training phase 221, determining 301 a set of actions 212 of the corresponding set of agents 201, 202 using a corresponding set of state-action-functions 230, respectively. The set of state-action-functions 230 is typically dependent on the set of states 211 of the corresponding set of agents 201, 202. In particular, the state-action-function 230 may be configured to and/or may be trained to enable the state-action-function 230 to indicate the cumulated future rewards which are expected for different state-action pairs. Hence, at a given time instant of the iterative training phase 221, the current version of the state-action-function 230 for an agent 201 may be used to determine the action 212 of the agent 201 in dependence of the state 211 of the agent 201 (notably the action 212 that maximizes the value of the state-action-function 230).

Furthermore, the method 300 may comprise determining 302 a set of updated states 211 (for the subsequent time instant) of the corresponding set of agents 201, 202 based on and/or in dependence of the determined set of actions 212. For this purpose, an entity 100, 110 may be modelled using a transition function T (e.g., within a simulator). Alternatively, or in addition, the updated state 211 may be determined based on updated sensor data from the one or more sensors 102 of the entity 100, 110.

The method 300 may further comprise determining 303 a set of instant rewards for the corresponding set of agents 201, 202, based on the set of actions 212 and based on the set of states 211 and/or based on the set of updated states 211 of the corresponding set of agents 201, 202. For this purpose, the reward functions for the different entities 100, 110 or corresponding agents 201, 202 may be used.

In addition, the method 300 comprises updating 304 the set of state-action-functions 230 based on the set of instant rewards. The updating 304 may be performed using the Bellman equation (as outlined in the present document).

The method 300 may be repeated iteratively at a sequence of time instants, e.g., until reaching a pre-determined convergence criteria. The set of policies 210 for controlling the corresponding set of acting entities 100, 110 may be determined based on the updated set of state-action-functions 230, respectively (notably subsequent to convergence of the training phase 221).

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A method (300) for determining a set of policies (210) for controlling a corresponding set of different acting entities (100, 110) which is represented by a corresponding set of agents (201, 202), the method (300) comprising, at a time instant of an iterative training phase (221),

   - determining (301) a set of actions (212) of the corresponding set of agents (201, 202) using a corresponding set of state-action-functions (230), respectively; wherein the set of state-action-functions (230) is dependent on a set of states (211) of the corresponding set of agents (201, 202);
   - determining (302) a set of updated states (211) of the corresponding set of agents (201, 202) based on the determined set of actions (212);
   - determining (303) a set of instant rewards for the corresponding set of agents (201, 202) based on the set of actions (212) and based on the set of states (211) and/or based on the set of updated states (211) of the corresponding set of agents (201, 202); and
   - updating (304) the set of state-action-functions (230) based on the set of instant rewards; wherein the set of policies (210) for controlling the corresponding set of acting entities (100, 110) is determined based on the updated set of state-action-functions (230), respectively.

2. The method (300) of claim 1, wherein the instant reward for a first agent (201) from the set of agents (201, 202) comprises

   - a common reward term for a common reward which is common to all agents (201, 202) from the set of agents (201, 202); and
   - an individual reward term for an individual reward which is only applicable to the first agent (201) and which is not applicable to the one or more other agents (201) from the set of agents (201, 202).

3. The method (300) of any previous claims, wherein the method (300) comprises applying a symmetry function to a first state-action-function (230) from the set of state-action-functions (230), to determine a first action (212) from the set of actions (212).

4. The method (300) of claim 3, wherein

   - the symmetry function is selected in a pseudo-random manner from an overall set of symmetry functions; and/or
   - the symmetry function is dependent on a context for which the set of policies (210) is determined.

5. The method (300) of any previous claims, wherein the set of state-action-functions (230) is updated in dependence on a grounded belief.

6. The method (300) of any previous claims, wherein an acting entity (100) from the set of acting entities (100, 110) is a collaborative robot interacting with a human being, in particular within a manufacturing environment.

7. The method (300) of any previous claims, wherein

   - the state-action-functions (230) are each represented by an artificial neural network each comprising a set of parameters; and
   - updating (304) the set of state-action-functions (230) comprises updating the set of parameters of the artificial neural networks of the set of state-action-functions (230).

8. The method (300) of any previous claims, wherein the method (300) comprises

   - determining sensor data from sensors (102) of the set of acting entities (100, 110); and
   - determining the set of states (211) of the corresponding set of agents (201, 202) based on the sensor data.

9. The method (300) of any previous claims, wherein the set of instant rewards for the corresponding set of agents (201, 202) is determined using a corresponding set of reward functions for the corresponding set of agents (201, 202), respectively.

10. The method (300) of any previous claims, wherein the state-action-function (230) for a first agent (201) depends on

    - the action (212) and the state (211) of the first agent (201); and
    - the action (212) and the state (211) of at least one other agent (202) from the set of agents (201, 202).

11. The method (300) of any previous claims, wherein the method (300) makes use of a Multi-Agent Deep Deterministic Policy Gradient algorithm for determining the set of policies (210).

12. The method (300) of any previous claims, wherein the policy (210) for an entity (100, 110) is determined based on the state-action-function (230) for the corresponding agent (201, 202) by determining for each possible state (211) an action (212) which maximizes the state-action-function (230).

13. The method (300) of any previous claims, wherein the method (300) comprises controlling at least one of the set of acting entities (100, 110) using the corresponding policy (210).

14. A training system (101, 200) for determining a set of policies (210) for controlling a corresponding set of different acting entities (100, 110) which is represented by a corresponding set of agents (201, 202); wherein the training system (101, 200) is configured, at a time instant of an iterative training phase (221), to

    - determine a set of actions (212) of the corresponding set of agents (201, 202) using a corresponding set of state-action-functions (230), respectively; wherein the set of state-action-functions (230) is dependent on a set of states (211) of the corresponding set of agents (201, 202);
    - determine a set of updated states (211) of the corresponding set of agents (201, 202) based on the determined set of actions (212);
    - determine a set of instant rewards for the corresponding set of agents (201, 202) based on the set of actions (212) and based on the set of states (211) and/or based on the set of updated states (211) of the corresponding set of agents (201, 202);
    - update the set of state-action-functions (230) based on the set of instant rewards; wherein the set of policies (210) for controlling the corresponding set of acting entities (100, 110) is determined based on the updated set of state-action-functions (230), respectively.

100 ⟍

102

104

103

101

**Fig. 1a**

122 ⟍    110 ⟍

121 ⟍    100 ⟍

**Fig. 1b**

201    202

221 ⟍    222 ⟍    210    210    ⟍ 200

211 ⟍    ⟍ 212    211 ⟍    ⟍ 212

220    220

**Fig. 2**

300 ⤳

determining actions of the N agents using the state-action-functions for the N agents, based on the states of the N agents ⟋ 301

determining updated states of the N agents ⟋ 302

determining instant rewards for the N agents based on the actions and the states of the N agents, respectively ⟋ 303

updating the action value functions for the N agents based on the instant rewards ⟋ 304

**Fig. 3**

Europäisches
Patentamt

European
Patent Office

Office européen
des brevets

## EUROPEAN SEARCH REPORT

**Application Number**

EP 21 20 1680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FILIPPOS CHRISTIANOS ET AL: "Shared Experience Actor-Critic for Multi-Agent Reinforcement Learning", ARXIV.ORG, CORNELL UNIVERSITY LIBRARY, 201 OLIN LIBRARY CORNELL UNIVERSITY ITHACA, NY 14853, 23 January 2021 (2021-01-23), XP081864769, * the whole document * | 1-14 | INV. G06N3/00 G06N3/04 G06N7/00 G06N3/08 B60W50/00 |
| X | PARK YOUNG JOON ET AL: "Cooperative Multi-Agent Reinforcement Learning With Approximate Model Learning", IEEE ACCESS, IEEE, USA, vol. 8, 6 July 2020 (2020-07-06), pages 125389-125400, XP011799485, DOI: 10.1109/ACCESS.2020.3007219 [retrieved on 2020-07-17] | 1,14 | |
| A | * the whole document * | 2-13 | |
| X | YILUN ZHOU ET AL: "On Memory Mechanism in Multi-Agent Reinforcement Learning", ARXIV.ORG, CORNELL UNIVERSITY LIBRARY, 201 OLIN LIBRARY CORNELL UNIVERSITY ITHACA, NY 14853, 11 September 2019 (2019-09-11), XP081481822, | 1,14 | TECHNICAL FIELDS SEARCHED (IPC) G06N B60W |
| A | * the whole document * | 2-13 | |
| E | EP 3 961 598 A1 (BAYERISCHE MOTOREN WERKE AG [DE]) 2 March 2022 (2022-03-02) * the whole document * | 1-14 | |

The present search report has been drawn up for all claims

| Place of search | Date of completion of the search | Examiner |
|---|---|---|
| Munich | 6 April 2022 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 20 1680

This annex lists the patent family members relating to the patent documents cited in  the above-mentioned European search report.
The members are as contained in the European Patent Office EDP file on
The European Patent Office is in no way liable for these particulars which are merely given for the purpose of information.

06-04-2022

| Patent document cited in search report | Publication date | Patent family member(s) | Publication date |
|---|---|---|---|
| EP 3961598    A1 | 02-03-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. LOWE ; Y. I. WU ; A. TAMAR ; J. HARB ; O. P. ABBEEL ; I. MORDATCH.** Multi-agent actor critic for mixed cooperative-competitive environments. *Advances in neural information processing systems,* 2017, 6379-6390

- **HENGYUAN HU et al.** Other-Play'' for Zero-Shot Co-ordination. *arXiv:2003.02979v3*
- **HENGYUAN HU et al.** Off-Belief Learning. *arXiv:2103.04000v5*